# EUROPÄISCHE PATENTSCHRIFT

(11) **EP 2 820 738 B1**
(45) Veröffentlichungstag und Bekanntmachung des Hinweises auf die Patenterteilung: **07.03.2018**
(21) Anmeldenummer: 13702985.6
(22) Anmeldetag: 31.01.2013
(51) Int. Cl.: H02J 4/00, G05B 19/042

(54) **MULTIFUNKTIONALE I/O-VORRICHTUNG**
MULTIFUNCTIONAL I/O DEVICE
DISPOSITIF D'ENTRÉE/SORTIE MULTIFONCTION

(30) Priorität: 28.02.2012 DE 102012101615
(43) Veröffentlichungstag der Anmeldung: 07.01.2015
(73) Patentinhaber: Endress+Hauser GmbH+Co. KG, 79689 Maulburg (DE)
(72) Erfinder: PAUL, Tobias, 79650 Schopfheim (DE); STIB, Ralph, 79677 Schönau (DE); ZENUNI, Armend, 79539 Lörrach (DE)
(74) Vertreter: Andres, Angelika Maria
(86) Internationale Anmeldenummer: PCT/EP2013/051869
(87) Internationale Veröffentlichungsnummer: WO 2013/127591

(56) Entgegenhaltungen:
- WO-A2-02/08867
- DE-A1-102006 052 291

## Beschreibung

Die Erfindung betrifft eine multifunktionale Eingabe-/Ausgabe-Vorrichtung, nachfolgend I/O-Vorrichtung genannt, welche eine Anschlussklemme mit zwei Anschlüssen und einer Schaltungselektronik aufweist.

Aus dem Stand der Technik sind bereits I/O-Vorrichtung bekannt, welche mittels dreier unterschiedlicher Anschlussklemmen folgende drei Funktionen realisieren können: erstens eine angeschlossene extern getriebene Last zu schalten bzw. zu steuern; zweitens das Anliegen eines passiven Eingangssignals an einer zweiten Anschlussklemme zu detektieren und drittens das Anliegen eines aktiven Eingangssignals an einer dritten Anschlussklemme zu detektieren. Dies bedeutet, dass zur Realisierung dieser drei unterschiedlichen Funktionen, also einer Ausgangs- und zweier Eingangsfunktionen drei Anschlussklemmen mit insgesamt fünf Anschlüssen auf einer Platine benötigt werden, was zu einem erhöhten Platzbedarf auf der Platine führt, welcher wiederum zu erhöhten Kosten beim Aufbau der I/O-Vorrichtung auf einer Platine führt und später dann auch höhere Lagerhaltungskosten verursacht. Daher liegt ein großes Augenmerk darauf, dass der Platz, der zum Aufbau einer I/O-Vorrichtung auf der Platine benötigt wird, möglichst gering gehalten wird.

Des Weiteren sind aus dem Stand der Technik bereits I/O-Vorrichtungen bekannt, welche an zwei Anschlussklemmen mit drei Anschlüssen an der ersten Anschlussklemme ein Gleichspannungssignal (DC) oder aber ein Wechselspannungssignal (AC) als aktives Eingangssignals und an der zweiten Anschlussklemme ein passives Eingangssignal detektieren können. Das hierbei zu erkennende aktive Eingangssignal oder passive Eingangssignal kann jedoch nur in einem kleinen Spannungsbereich erkannt werden, was wiederum ein Nachteil des Stands der Technik ist.

Ferner sind aus dem Stand der Technik die WO 02/08867 A2, die eine universell konfigurierbare Schnittstelle zur elektrisch, elektronischen und elektromechanischen Steuerung, Erfassung und Betätigung offenbart und die DE 10 2006 052291 A1, die ein Feldgerät mit einer Geräteelektronik zum Erfassen von Messwerten und/oder zum Regeln eines Aktors offenbart, bekannt geworden. Der Erfindung liegt die Aufgabe zugrunde, eine multifunktionale I/O-Vorrichtung vorzuschlagen, die beim Aufbau auf der Platine möglichst wenig Platz benötigt.

Die Aufgabe wird durch eine multifunktionale I/O-vorrichtung bestehend aus einer Anschlussklemme mit zwei Anschlüssen und einer Schaltungselektronik realisiert, welche mit Hilfe von mehreren einstellbaren Betriebszuständen ein an den zwei Anschlüssen der Anschlussklemme anliegendes aktives Eingangssignal oder passives Eingangssignal erkennt oder eine extern getriebene Last, die an den zwei Anschlüssen der Anschlussklemme angeschlossen ist, steuert/schaltet, wobei die Schaltungselektronik Folgendes aufweist: mindestens ein Schaltelement, welches durch ein erstes Steuersignal von einer Logikeinheit so ansteuerbar ist, dass es die zwei Anschlüsse der Anschlussklemme kurzschließt oder voneinander trennt, einen Signalgenerator, welcher durch ein zweites Steuersignal von der Logikeinheit ansteuerbar ist, so dass er beim Anliegen des aktiven Eingangssignals, welches in der Lage ist dem Signalgenerator genügend Energie zuzuführen damit dieser zweckmäßig betrieben werden kann oder beim Anliegen des passiven Eingangssignals, welches nicht in der Lage ist dem Signalgenerator genügend Energie zuzuführen damit dieser zweckmäßig betrieben werden kann, ein Statussignal generiert und dieses der Logikeinheit zuführt, eine Energiequelle, welche durch ein drittes Steuersignal von der Logikeinheit so ansteuerbar ist, dass sie beim Anliegen des passiven Eingangssignals an den zwei Anschlüssen der Anschlussklemme, die benötigte Energie für den Betrieb des Signalgenerators bereitstellt, eine Schutzvorrichtung die zwischen dem Signalgenerator und der Energiequelle geschaltet ist, die Logikeinheit, welche abhängig von dem jeweils eingestellten Betriebszustand der Schaltungselektronik zwischen einem ersten Betriebszustand, einem zweiten Betriebszustand und einem dritten Betriebszustand unterscheidet und mit Hilfe des ersten Steuersignals, des zweiten Steuersignals und des dritten Steuersignals das Schaltelement, den Signalgenerator und die Energiequelle entsprechend dem eingestellten Betriebszustand ansteuert.

Erfindungsgemäß wird der Platzbedarf auf der Platine beim Aufbau der multifunktionalen I/O-Vorrichtung also insbesondere dadurch reduziert, dass die multifunktionale I/O-Vorrichtung aus lediglich einer Anschlussklemme, bestehend aus zwei Anschlüssen, besteht und die multifunktionale I/O-Vorrichtung drei unterschiedliche Betriebszustände kennt bzw. realisieren kann, wobei jeder der individuellen Betriebszustände eine spezielle Funktion aufweist. Der erste Betriebszustand und somit die erste Funktion, die mit der multifunktionalen I/O-Vorrichtung realisiert wird, besteht darin, eine an die Anschlüsse der Anschlussklemme angeschlossene extern getriebene Last bedarfsabhängig zu steuern bzw. zu schalten. Der zweite Betriebszustand und somit die zweite Funktion, die mit der multifunktionalen I/O-Vorrichtung realisiert wird, ist das Vorhandensein oder Nichtvorhandensein eines aktiven Eingangssignals an den Anschlüssen der Anschlussklemme zu detektieren. Der dritte Betriebszustand und somit die dritte Funktion, die mit der multifunktionalen I/O-Vorrichtung realisiert wird, ist das Vorhandensein oder Nichtvorhandensein eines passiven Eingangssignals an den Anschlüssen der Anschlussklemme zu detektieren. Zur Realisierung dieser unterschiedlichen Betriebszustände bzw. der unterschiedlichen Funktionen werden das Schaltelement, die Energiequelle und der Signalgenerator entsprechend des jeweiligen Betriebszustands von der Logikeinheit konfiguriert.

Dies bietet den Vorteil, dass nicht wie bisher zur Realisierung jedes einzelnen dieser Betriebszustände bzw. dieser Funktionen eine separate Anschlussklemme benötigt wird, sondern man in der Lage ist, eine einzige Anschlussklemme bestehend aus zwei Anschlüssen für die verschiedenen Funktionen zu verwenden und damit einhergehend der Platzbedarf zum Aufbau einer solchen multifunktionalen I/O-Vorrichtung auf der Platine minimiert werden kann.

Eine vorteilhafte Ausgestaltung der erfindungsgemäßen Vorrichtung sieht eine Gleichrichtervorrichtung vor, welche im Fall des Anliegens einer Wechselspannung als passives Eingangssignal oder aktives Eingangssignal, das anliegende passive Eingangssignal oder aktive Eingangssignal gleichrichtet und das gleichgerichtete passive Eingangssignal oder aktive Eingangssignal dem nachgeschalteten Signalgenerator zuführt.
Diese bietet den Vorteil, dass es durch Einbringen einer Gleichrichtervorrichtung möglich ist, sowohl Gleichspannungssignale als auch Wechselspannungssignale an den Anschlüssen der Anschlussklemme zu detektieren.

Eine vorteilhafte Ausgestaltung der erfindungsgemäßen Vorrichtung sieht vor, dass in dem ersten Betriebszustand der Signalgenerator und die Energiequelle inaktiv sind und die Logikeinheit das Schaltelement bedarfsabhängig schaltet, um die angeschlossene extern getriebene Last zwischen den zwei Anschlüssen der Anschlussklemme zu steuern.

Eine weitere vorteilhafte Ausgestaltung der erfindungsgemäßen Vorrichtung sieht vor, dass in dem zweiten Betriebszustand das Schaltelement und die Energiequelle inaktiv sind und der Signalgenerator aktiv ist, um das aktive Eingangssignal zwischen den zwei Anschlüssen der Anschlussklemme zu erkennen und mit Hilfe des Signalgenerators ein Statussignal zu generieren und der Logikeinheit zuzuführen.

Gemäß einer weiteren Ausgestaltung der erfindungsgemäßen Vorrichtung wird vorgeschlagen, dass in dem dritten Betriebszustand das Schaltelement inaktiv ist und der Signalgenerator und die Energiequelle aktiv sind, um das passive Eingangssignal zwischen den zwei Anschlüssen der Anschlussklemme zu erkennen und mit Hilfe des Signalgenerators ein Statussignal zu generieren und der Logikeinheit zuzuführen.

Nach einem anderen Vorschlag wird die erfindungsgemäße Vorrichtung dadurch ausgestaltet, dass in dem Schaltungszweig, welcher die Gleichrichtervorrichtung, den Signalgenerator und die Schutzvorrichtung aufweist, weiterhin ein Strombegrenzungselement zur Begrenzung und/oder Regelung des Stroms in diesem Schaltungszweig vorgesehen ist. Dies bietet den Vorteil, dass mit Hilfe des Strombegrenzungselements, der Strom und somit die Energie begrenzt wird, welche von dem angelegten aktiven Eingangssignal kommt und an den Signalgenerator geführt wird. Auf diese Weise können auch aktive Eingangssignale in einem weiten Spannungsbereich detektiert werden ohne dass die Gefahr besteht, dass der Signalgenerator aufgrund zu hoher Energieaufnahme überlastet und ggfl. zerstört wird.

Nach einer weiteren Ausführungsform der erfindungsgemäßen Vorrichtung wird vorgeschlagen, dass das Schaltelement und das dazugehörige erste Steuersignal redundant ausgebildet sind.

Dies bietet den Vorteil, dass durch Redundanz bzw. doppelter Auslegung des Schaltelements und des dazugehörigen ersten Steuersignals, die multifunktionale I/O-Vorrichtung den Sicherheitsanforderungen gemäß dem SIL-Standard (Safety Integrity Level) entspricht, welcher in der Prozessautomatisierung wichtig ist.

Gemäß einem letzten Vorschlag wird die erfindungsgemäße Vorrichtung dadurch ausgestaltet, dass das erste Steuersignal, das zweite Steuersignal, das dritte Steuersignal und das Statussignal mittels einer galvanischen Trennung von der Logikeinheit getrennt sind.

Dies bietet den Vorteil, dass durch die galvanische Trennung die multifunktionale I/O-Vorrichtung auch in explosionsgefährdeten Bereichen, wie beispielsweise der EX-Zone II, eingesetzt werden kann.

Die Erfindung wird anhand der nachfolgenden Figuren näher erläutert. Es zeigt:
Fig. 1: ein Blockschaltbild einer herkömmlichen aus dem Stand der Technik bereits bekannten I/O-Vorrichtung,
Fig. 2: ein Blockschaltbild einer Ausgestaltung der erfindungsgemäßen multifunktionalen I/O-Vorrichtung,
Fig. 3: eine detaillierte Darstellung der in Fig. 2 gezeigten multifunktionalen I/O-Vorrichtung im ersten Betriebszustand,
Fig. 4: eine detaillierte Darstellung der in Fig. 2 gezeigten multifunktionalen I/O-Vorrichtung im zweiten Betriebszustand,
Fig. 5: eine detaillierte Darstellung der in Fig. 2 gezeigten multifunktionalen I/O-Vorrichtung im dritten Betriebszustand,
Fig. 6: eine zweite Ausgestaltung der erfindungsgemäßen multifunktionalen I/O-Vorrichtung.

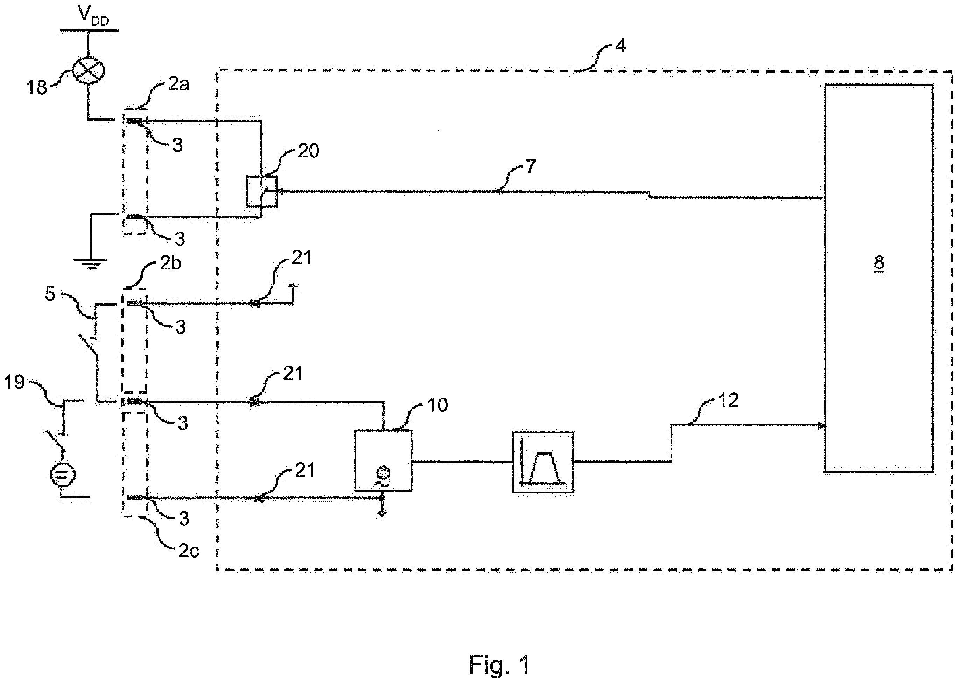

Fig. 1 zeigt ein Blockschaltbild einer herkömmlichen aus dem Stand der Technik bereits bekannten I/O-Vorrichtung, welche aus drei individuellen Anschlussklemmen 2a, 2b, 2c mit insgesamt fünf Anschlüssen 3 und einer Schaltungselektronik 4 besteht, wobei die mittlere Anschlussklemme 2b und die untere Anschlussklemme 2c einen gemeinsamen Anschiuss 3 besitzen. Die Schaltungselektronik 4 weist ein Relais 20, einen Signalgenerator 10, drei Dioden 21 auf, wobei das Relais 20 mit Hilfe eines ersten Steuersignals 7 von der Logikeinheit 8 angesteuert wird und der Signalgenerator 10 das Anliegen eines aktiven Eingangssignals 19 oder passiven Eingangssignals 5 mit Hilfe eines Statussignals 12 an die Logikeinheit 8 liefert. Die in Fig.1 dargestellten Dioden 21 dienen hierbei als Verpolschutz.

Mit Hilfe der drei Anschlussklemmen 2a, 2b, 2c, bestehend aus den fünf Anschlüssen 3, werden nun folgende Funktionen realisiert: an der obersten Anschlussklemme 2a wird eine angeschlossene extern getriebene Last 18 mittels des Relais 20 und dem ersten Steuersignal 7 über eine Logikeinheit 8 bedarfsabhängig gesteuert bzw. gestaltet; an der mittleren Anschlussklemme 2b wird das Vorhandensein oder Nichtvorhandensein eines passiven Eingangssignals 5 detektiert; an der unteren Anschlussklemme 2c wird das Vorhandensein oder Nichtvorhandensein eines aktiven Eingangssignals 19 detektiert.

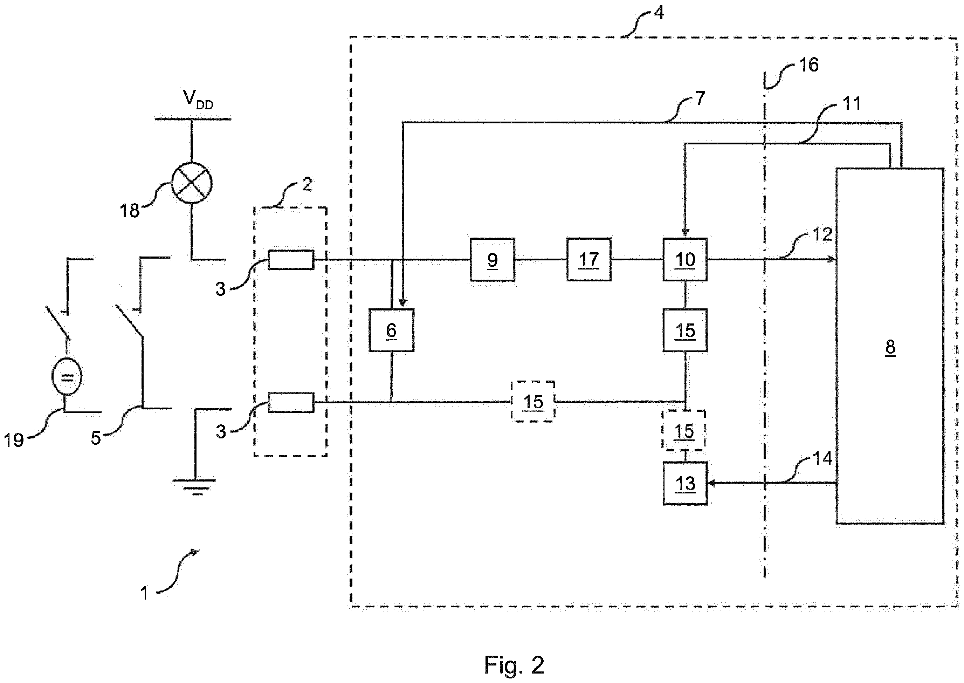

Fig. 2 zeigt ein Blockschaltbild einer Ausgestaltung der erfindungsgemäßen multifunktionalen I/O-Vorrichtung 1. Diese besteht aus einer Anschlussklemme 2 mit zwei Anschlüssen 3 und einer Schaltungselektronik 4. Hierbei dient die Anschlussklemme 2 entweder dazu eine angeschlossene extern getriebene Last 18 zu steuern bzw. zu schalten, oder aber ein an die Anschlüsse 3 der Anschlussklemme 2 angelegtes passives Eingangssignal 5 oder aktives Eingangssignal 19 zu detektieren. Als typische Beispiele für eine angeschlossene extern getriebene Last 18 seien hier folgende erwähnt: SPS, Schütz, Motor, Pumpe, Ventil, Kontrollleuchte, Sirene oder ähnliche Signalgeber.

An dieser Stelle sei angemerkt, dass es sich, wie schon geschrieben, um ein aktives Eingangssignal 19 oder passives Eingangssignal 5 handeln kann, welches an den Anschlüssen 3 der Anschlussklemme 2 anliegt. Ferner kann es sich bei dem aktiven Eingangssignal 19 sowohl um ein Gleichspannungssignal als auch um ein Wechselspannungssignal handeln.

In diesem Zusammenhang soll unter einem aktiven Eingangssignal 19 verstanden werden, dass dieses Signal in der Lage ist, dem Signalgenerator 10 genügend Energie zur Verfügung zu stellen, damit dieser zweckmäßig betrieben werden kann. Als passives Eingangssignal 5 soll im Gegensatz dazu ein Signal verstanden werden, welches nicht in der Lage ist, dem Signalgenerator 10 genügend Energie zuzuführen, um diesen zweckmäßig zu betreiben. Dies hat zur Folge, dass in diesem Fall für den zweckmäßigen Betrieb des Signalgenerators 10 eine zusätzliche Energiequelle 13 benötigt wird, welche die benötigte Energie bereitstellt.

Die Scllaltungselektronik 4 besteht aus mehreren individuellen Bauteilen, auf welche im Folgenden näher eingegangen werden soll.

Das Schaltelement 6, welches typischerweise aus mindestens einem Relais besteht und mittels einer Logikeinheit 8 entsprechend dem jeweils eingestellten Betriebszustand über das erste Steuersignal 7 angesteuert wird, dient dafür, die beiden Anschlüsse 3 der Anschlussklemme 2 kurzzuschließen oder aber voneinander zu trennen, um so als Schalter für eine mögliche angeschlossene extern getriebene Last 18 zu fungieren.

Die Gleichrichtervorrichtung 9, die typischerweise aus einer oder mehreren Dioden besteht, dient dazu, ein als Wechselspannung anliegendes aktives Eingangsignal 19 an den beiden Anschlüssen 3 der Anschlussklemme 2 gleichzurichten, um so die nachgeschalteten Schaltungselemente zweckmäßig zu betreiben.

Der Signalgenerator 10, welcher über das zweite Steuersignals 11 von der Logikeinheit entsprechend dem jeweils eingestellten Betriebszustand angesteuert wird, dient dazu, dass dieser beim Anliegen eines passiven Eingangssignals 5 oder eines aktiven Eingangssignals 19 an den beiden Anschlüssen 3 der Anschlussklemme 2 ein digitales Statussignal 12 erzeugt und der Logikeinheit 8 zuführt, um auf diese Weise das Vorhandensein oder Nichtvorhandensein eines passiven Eingangssignals 5 oder aktiven Eingangssignals 19 zu detektieren.

Das Statussignal 12, welches von dem Signalgenerator 10 bei dem Vorhandensein oder Nichtvorhandensein eines passiven Eingangssignals 5 oder aktiven Eingangssignals 19 an den beiden Anschlüssen 3 der Anschlussklemme 2 erzeugt wird und an die Logikeinheit 8 geliefert wird, ist wie bereits oben erwähnt, ein digitales Signal, welches sowohl einen logischen H-Pegel als auch einen logischen L-Pegel annehmen kann.

Anders ausgedrückt bedeutet dies, dass, sobald ein passives Eingangssignal 5 oder aktives Eingangssignal 19 an den Anschlüssen 3 der Anschlussklemme 2 anliegt, mit Hilfe des Signalgenerators 10 ein logischer H-Pegel als Statussignal 12 erzeugt und an die Logikeinheit 8 geliefert wird. Im Fall, dass an den Anschlüssen 3 der Anschlussklemme 2 kein passives Eingangssignal 5 oder aktives Eingangssignal 19 anliegt, wird ein logischer L-Pegel als Statussignal 12 erzeugt und an die Logikeinheit 8 geliefert. Auf diese Weise ist es möglich, das Vorhandensein oder Nichtvorhandensein eines passiven Eingangssignals 5 oder aktiven Eingangssignals 19 an den Anschlüssen 3 der Anschlussklemme 2 mit Hilfe der Schaltungselektronik 4 und der Logikeinheit 8 zu detektieren bzw. zu erkennen.

Die Energiequelle 13 wird durch die Logikeinheit 8 im dritten Betriebszustand aktiviert, während sie in allen anderen, also dem ersten Betriebszustand und dem zweiten Betriebszustand deaktiviert ist. Im dritten Betriebszustand soll das Vorhandensein oder Nichtvorhandensein eines passiven Eingangssignals 5, welches an die Anschlüsse der Anschlussklemme angelegt detektiert werden. Da das angelegte passive Eingangssignal 5 keine Energie für den zweckmäßigen Betrieb des Signalgenerators bereitstellt wird hierfür die Energiequelle 13 benötigt. Diese sorgt dafür, dass sobald ein passives Eingangssignal 5 an den Anschlüssen 3 der Anschlussklemme 2 anliegt, und es somit ein direkte Verbindung zwischen der Energiequelle 13 und dem Signalgenerator 10 gibt, die für den Signalgenerator 10 benötigte Energie bereitzustellen.

Die Schutzvorrichtung 15, welche typischerweise aus mindestens einer Diode besteht, dient dazu, den Signalgenerator 10 beim Betrieb der Energiequelle 13 vor unsachgemäßer Ansteuerung zu schützen. Es sei an dieser Stelle angemerkt, dass sich die Schutzvorrichtung 15 nicht zwangsläufig an der gezeigten Position befinden muss. Weitere denkbare Positionen sind in Fig. 2 durch einen gestrichelten Kasten dargestellt.

Das Strombegrenzungselement 17, welches den Strom in dem Schaltungszweig bestehend aus der Gleichrichtervorrichtung 9, dem Signalgenerator 10 und der Schutzvorrichtung 15 begrenzt bzw. regelt. Auf diese Weise, wird der Anteil der Energie des aktiven Eingangsignais 19 begrenzt, und es kann verhindert werden, dass bei aktiven Eingangssignalen 19 in einem weiten Spannungsbereich der Signalgenerator 10 überlastet wird und ggfl. zerstört wird. Mit aktiven Eingangssignalen 19 in einem weiten Spannungsbereich sind typischerweise Signale von 2,5V bis 230V gemeint, wobei es sich sowohl um Gleichspannungssignale als auch um Wechselspannungssignale handeln kann.

Die Logikeinheit 8, welche typischerweise ein Mikroprozessor ist, dient dazu, das Schaltelement 6 mittels dem ersten Steuersignal 7 sowie den Signalgenerator 10 mittels dem zweiten Steuersignal 11 und die Energiequelle 13 mittels dem dritten Steuersignal 14 entsprechend dem jeweils eingestellten Betriebszustand so anzusteuern, dass diese abhängig von dem jeweils eingestellten Betriebszustand aktiv oder inaktiv sind. Die Konfiguration bzw. die Auswahl des jeweils gewünschten Betriebszustands kann hierbei beispielsweise so angedacht sein, dass dies in einem dem regulären Betrieb der multifunktionalen I/O-Vorrichtung 1 vorgelagerten Schritt geschieht.

Dieser Konfigurationsschritt kann sowohl im Vorfeld, d.h. vor der Auslieferung an den späteren Kunden, als auch später während des regulären Betriebes, der multifunktionalen I/O-Vorrichtung 1 zum Einstellen des jeweils gewünschten Betriebszustands entweder durch den Kunden selbst oder einen Servicetechniker erfolgen.

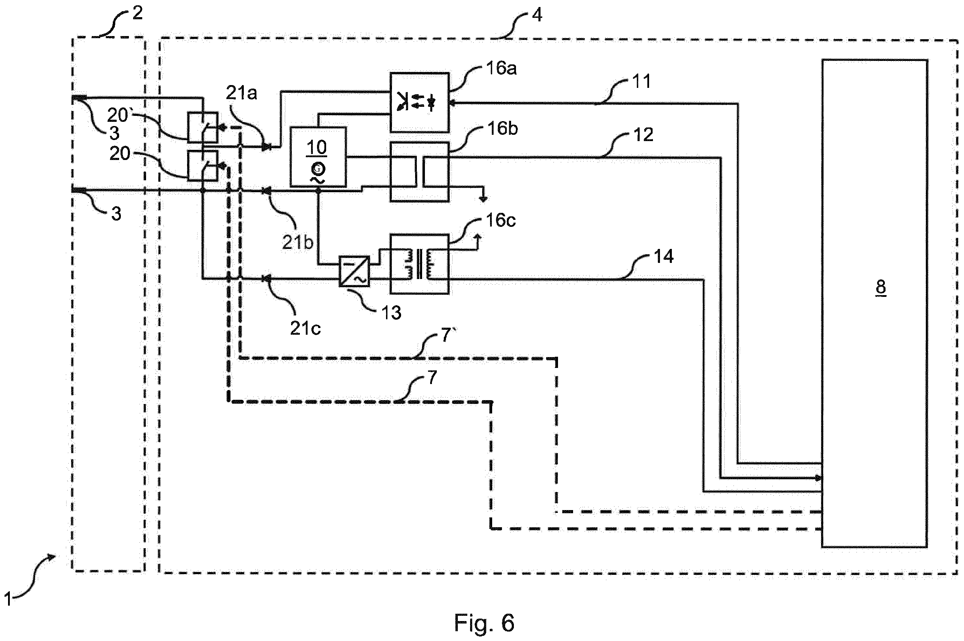

Ferner ist in Fig. 2 eine galvanische Trennung 16 des ersten Steuersignals 7, des zweiten Steuersignals 11, des dritten Steuersignals 14 und des Statussignals 12 angedeutet. Auf diese galvanische Trennung 16 wird in Fig. 6 näher eingegangen.

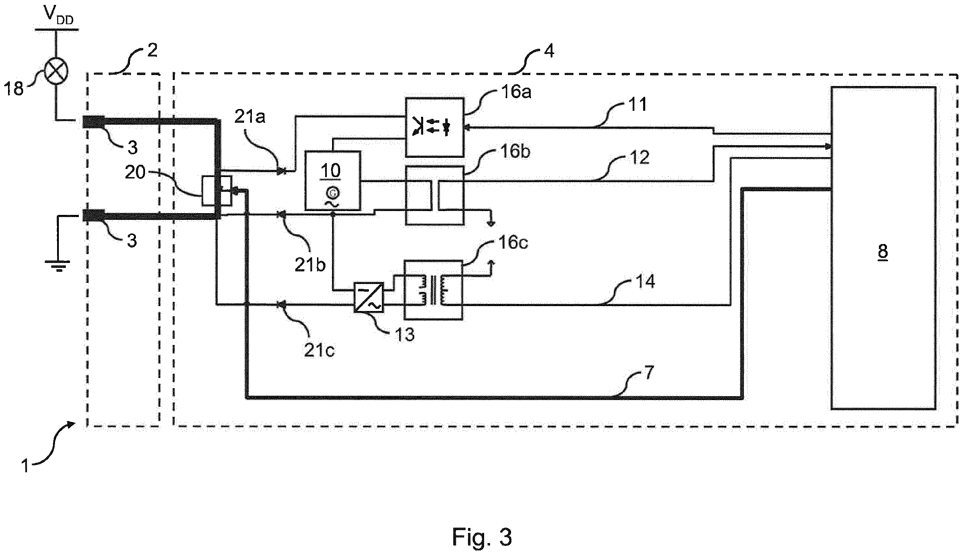

Fig. 3 zeigt eine detaillierte Darstellung der in Fig. 2 gezeigten multifunktionalen I/O-Vorrichtung im ersten Betriebszustand.

In diesem ersten Betriebszustand wird eine an den Anschlüssen 3 der Anschlussklemme 2 angeschlossene extern getriebene Last 18 gesteuert bzw. geschaltet. Hierzu ist die Logikeinheit 8 auf den ersten Betriebszustand vorkonfiguriert. Dies bedeutet, dass die Logikeinheit 8 mit Hilfe des zweiten Steuersignals 11 den Signalgenerator 10 und mit Hilfe des dritten Steuersignals 14 die Energiequelle 13 deaktiviert.

Anzumerken sei, dass das zweite Steuersignal 11 über eine galvanische Trennung 16a und das dritte Steuersignal 14 über eine weitere galvanische Trennung 16c von der Logikeinheit 8 getrennt sind. Hierauf soll an dieser Stelle nicht näher eingegangen werden, sondern erst bei der Beschreibung der Fig. 6.

Darüber hinaus sind in der Fig. 3 drei Dioden 21a, 21b, 21c dargestellt, wobei die Diode 21a und die Diode 21b als Gleichrichtervorrichtung und die Dioden 21c und wiederum die Diode 21b als Schutzvorrichtung dienen. Dies bedeutet, dass die Diode 21b eine Doppelfunktion besitzt und sowohl zur Gleichrichtung als auch zum Schutz verwendet wird.

Auf diese Weise kann die Logikeinheit 8 mit Hilfe des ersten Steuersignals 7 das Relais 20 bedarfsabhängig öffnen und schließen und so die extern getriebene Last schalten bzw. steuern. Der für diesen ersten Betriebszustand relevante Signalpfad ist in Fig. 3 fett dargestellt.

Als mögliche Beispiele für extern getriebene Lasten seien folgende genannt: SPS, Schütz, Motor, Pumpe, Ventil, Kontrollleuchte, Sirene oder ähnliche Signalgeber.

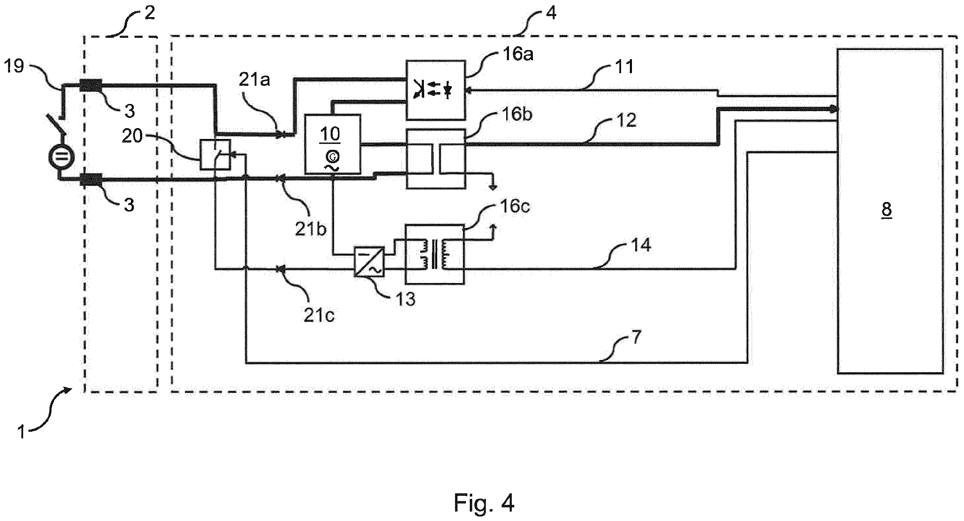

Fig. 4 zeigt eine detaillierte Darstellung der in Fig. 2 gezeigten multifunktionalen I/O-Vorrichtung im zweiten Betriebszustand. Der Aufbau der multifunktionalen I/O-Vorrichtung 1 ist entsprechend dem Aufbau, wie er in Fig. 3 dargestellt ist, lediglich die extern getriebene Last 18 wurde durch ein aktives Eingangssignal 19 ersetzt, da die multifunktionale I/O-Vorrichtung 1 in dem zweiten Betriebszustand ein Gleichspannungs- oder Wechselspannungssignal als aktives Eingangssignal 19 an den Anschlüssen 3 der Anschlussklemme 2 detektiert. Hierzu ist die Logikeinheit 8 auf diesen zweiten Betriebszustand vorkonfiguriert und wiederum sind die relevanten Signalpfade fett hervorgehoben. In diesem zweiten Betriebszustand wird durch die Logikeinheit 8, das Relais 20 mittels dem ersten Steuersignal 7 geöffnet und die Energiequelle 13 mittels dem dritten Steuersignal 14 deaktiviert und gleichzeitig der Signalgenerator 10 mittels dem zweiten Steuersignal 11 aktiviert. Auf diese Weise wird in dem Fall, dass ein aktives Eingangssignal 19 an den zwei Anschlüssen 3 der Anschlussklemme 2 anliegt, dieses über die Diode 21a und die Diode 21b, welche als Gleichrichtervorrichtung 9 dienen, zum Signalgenerator 10 geführt, und von diesem ein H-Pegel als Statussignal 12 erzeugt und an die Logikeinheit 8 geleitet. In diesem Betriebszustand, also dem zweiten Betriebszustand wird die für den zweckmäßigen Betrieb des Signalgenerators 10 benötigte Energie von dem angelegten aktiven Eingangssignal 19 bereitgestellt. Aufgrund der Dioden 21a und der Diode 21b, welche als Gleichrichtervorrichtung 9 dienen, ist es unerheblich, ob es sich bei dem anliegenden aktiven Eingangssignal um ein Gleichspannungs- oder Wechselspannungssignal handelt, da in dem Fall, dass es sich um ein Wechselspannungssignal handelt, dieses gleichgerichtet wird.
In dem Fall, dass kein aktives Eingangssignal 19 an den zwei Anschlüssen 3 der Anschlussklemme 2 anliegt, wird von dem Signalgenerator 10 ein L-Pegel als Statussignal 12 an die Logikeinheit 8 gegeben.
Auf diese Weise detektiert die Logikeinheit 8 in dem zweiten Betriebszustand das Vorhandensein oder Nichtvorhandensein eines aktiven Eingangssignals 19 an den Anschlüssen 3 der Anschlussklemme 2.

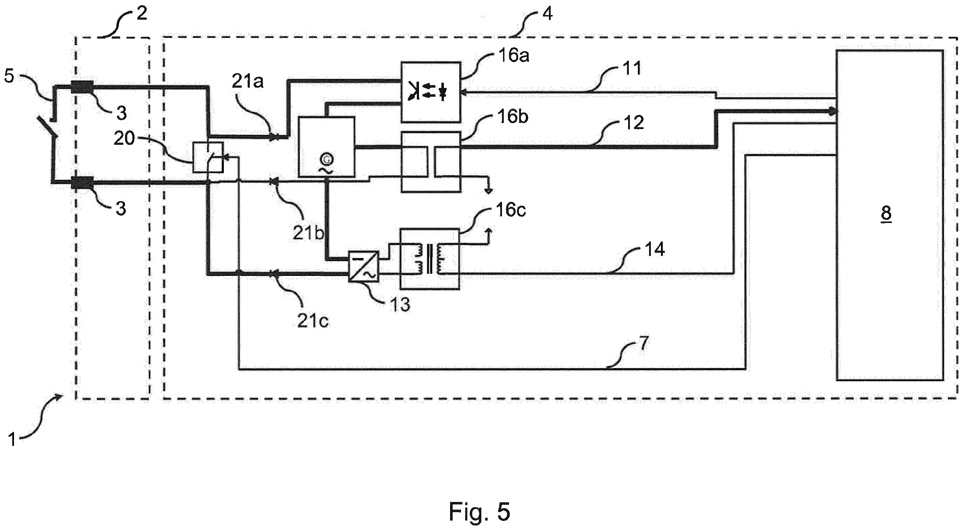

Fig. 5 zeigt eine detaillierte Darstellung der in Fig. 2 gezeigten multifunktionalen I/O-Vorrichtung im dritten Betriebszustand. Der Aufbau der multifunktionalen I/O-Vorrichtung 1 ist entsprechend dem Aufbau wie er in Fig. 3 dargestellt ist, lediglich die extern getriebene Last 18 wurde durch ein passives Eingangssignal 5 ersetzt, da die multifunktionale I/O-Vorrichtung 1 in dem dritten Betriebszustand ein passives Eingangssignal 5 an den Anschlüssen 3 der Anschlussklemme 2 detektiert. Hierzu ist die Logikeinheit 8 auf diesen dritten Betriebszustand vorkonfiguriert und wiederum sind die relevanten Signalpfade fett hervorgehoben. In diesem dritten Betriebszustand wird durch die Logikeinheit 8, das Relais 20 über das erste Steuersignal 7 deaktiviert und der Signalgenerator 10 über das zweite Steuersignal 11 und die Energiequelle 13 über das dritte Steuersignal 14 aktiviert. In diesem dritten Betriebszustand stellt die Energiequelle 13 die für den zweckmäßigen Betrieb des Signalgenerators 10 benötige Energie zur Verfügung, da das passive Eingangssignal 5 an den zwei Anschlüssen 3 der Anschlussklemme 2 nicht genügend bzw. keine Energie bereitstellt, um den Signalgenerator 10 zweckmäßig zu betreiben.

In dem Fall, dass ein passives Eingangssignal 5 an den zwei Anschlüssen 3 der Anschlussklemme 2 anliegt, wird dieses über die Diode 21a und die Diode 21c zum Signalgenerator 10 geführt und von diesem ein H-Pegel als Statussignal 12 erzeugt und an die Logikeinheit 8 geleitet.

Wie in dem zweiten Betriebszustand wird auch in diesem dritten Betriebszustand in dem Fall, dass kein passives Eingangssignal 5 an den zwei Anschlüssen 3 der Anschlussklemme 2 anliegt, von dem Signalgenerator 10 ein L-Pegel als Statussignal 12 an die Logikeinheit 8 geliefert.

Auf diese Weise detektiert die Logikeinheit 8 in dem zweiten Betriebszustand das Vorhandensein oder Nichtvorhandensein eines passiven Eingangssignals 5 an den Anschlüssen 3 der Anschlussklemme 2.

Fig. 6 zeigt eine zweite Ausgestaltung der erfindungsgemäßen multifunktionalen I/O-Vorrichtung. Hierbei wird das Relais 20, welches als Schaltelement 6 dient, sowie das dazugehörige erste Steuersignal 7 redundant bzw. doppelt ausgebildet. In Fig. 6 sind die redundanen Bauteile, also das Relais 20' und das erste Steuersignal 7' dargestellt. Diese Redundanz hat keinen Einfluss auf die zuvor beschriebenen Funktionen der multifunktionalen I/O-Vorrichtung 1, bietet jedoch den Vorteil, dass sie den Sicherheitsanforderungen gemäß dem SIL-Standard (Safety Integrity Level) genügt. Diese Sicherheitsanforderungen sind in der Prozessautomatisierung wichtig, um eine erhöhte Sicherheit durch die doppelte oder ggfl. auch mehrfache Auslegung aller sicherheitsrelevanten Hard- und Software-Komponenten zu erlangen. Durch diese Maßnahmen und ggfl. noch zusätzlich die diversitäre Auslegung soll sichergestellt werden, dass ein sicherheitskritischer Ausfall der Vorrichtung ebenso wie das Auftreten von gleichzeitig auftretenden systematischen Fehlern bei der Messwertbereitstellung mit hoher Wahrscheinlichkeit ausgeschlossen ist.

Ferner ist es wünschenswert, die multifunktionale I/O-Vorrichtung auch in explosionsgefährdeten Bereichen, beispielsweise der EX-Zone II einzusetzen. Hierzu ist es erforderlich, alle Signale, die entweder zu der Logikeinheit hinführen oder von ihr wegführen mittels galvanischer Trennung 16 zu trennen. Möglich ist, die galvanische Trennung 16a des zweiten Steuersignals 11 zur Steuerung des Signalgenerators, mittels optischer Übertragung, beispielsweise eines Optokopplers, des Statussignals 12 mittels induktiver galvanischer Trennung 16b, beispielsweise eines Transformators oder Übertragers, und des dritten Steuersignals 14 zur Steuerung der Energiequelle 13 mittels induktiver galvansicher Trennung 16c, beispielsweise eines Transformators, oder mittels kapazitiver galvanischer Trennung 16c, beispielsweise einer Ladungspumpe, zu realisieren. Die galvanische Trennung des ersten Steuersignals 7 findet in dem Relais 6 und dem Relais 6' an sich statt und ist in der Fig. 6 nicht näher gezeigt.

## Patentansprüche

1. Multifunktionale I/O-Vorrichtung (1), aufweisend eine Anschlussklemme (2) mit zwei Anschlüssen (3) und eine Schaltungselektronik (4), welche mit Hilfe von mehreren einstellbaren Betriebszuständen ein an den zwei Anschlüssen (3) der Anschlussklemme (2) anliegendes aktives Eingangssignal (19) oder passives Eingangssignal (5) erkennt oder eine extern getriebene Last (18), die an den zwei Anschlüssen der Anschlussklemme angeschlossen ist, steuert/schaltet, wobei die Schaltungselektronik (4) folgendes aufweist:
mindestens ein Schaltelement (6), welches durch ein erstes Steuersignal (7) von einer Logikeinheit (8) so ansteuerbar ist, dass es die zwei Anschlüsse (3) der Anschlussklemme (2) kurzschließt oder voneinander trennt,
einen Signalgenerator (10), welcher durch ein zweites Steuersignal (11) von der Logikeinheit (8) so ansteuerbar ist, dass er beim Anliegen des aktiven Eingangssignals (19), welches in der Lage ist dem Signalgenerator (10) genügend Energie zuzuführen damit dieser zweckmäßig betrieben werden kann oder beim Anliegen des passiven Eingangssignals (5), welches nicht in der Lage ist dem Signalgenerator (10) genügend Energie zuzuführen damit dieser zweckmäßig betrieben werden kann, ein Statussignal (12) generiert und dieses der Logikeinheit (8) zuführt,
eine Energiequelle (13), welche durch ein drittes Steuersignal (14) von der Logikeinheit (8) so ansteuerbar ist, dass sie beim Anliegen des passiven Eingangssignals (5) an den zwei Anschlüssen (3) der Anschlussklemme (2), die benötigte Energie für den Betrieb des Signalgenerators (10) bereitstellt,
eine Schutzvorrichtung (15) die zwischen dem Signalgenerator (10) und der Energiequelle (13) geschaltet ist,
die Logikeinheit (8), welche abhängig von dem jeweils eingestellten Betriebszustand der Schaltungselektronik (4) zwischen einem ersten Betriebszustand (I), einem zweiten Betriebszustand (II) und einem dritten Betriebszustand (III) unterscheidet und mit Hilfe des ersten Steuersignals (7), des zweiten Steuersignals (11) und des dritten Steuersignals (14) das Schaltelement (6), den Signalgenerator (10) und die Energiequelle (13) entsprechend dem eingestellten Betriebszustand ansteuert.

2. Vorrichtung nach Anspruch 1, wobei eine Gleichrichtervorrichtung (9) vorgesehen ist, welche im Fall des Anliegens einer Wechselspannung als passives Eingangssignal (5) oder aktives Eingangssignal (19), das anliegende passive Eingangssignal (5) oder aktive Eingangssignal (19) gleichrichtet und das gleichgerichtete passive Eingangssignal (5) oder aktive Eingangssignal (19) dem nachgeschalteten Signalgenerator (10) zuführt,

3. Vorrichtung nach Anspruch 1, wobei in dem ersten Betriebszustand (I) der Signalgenerator (10) und die Energiequelle (13) inaktiv sind und die Logikeinheit (8) das Schaltelement (6) bedarfsabhängig schaltet, um die angeschlossene extern getriebene Last (18) zwischen den zwei Anschlüssen (3) der Anschlussklemme (2) zu steuern.

4. Vorrichtung nach Anspruch 1 und 2, wobei in dem zweiten Betriebszustand (II) das Schaltelement (6) und die Energiequelle (13) inaktiv sind und der Signalgenerator (10) aktiv ist, um das aktive Eingangssignal (19) zwischen den zwei Anschlüssen (3) der Anschlussklemme (2) zu erkennen und mit Hilfe des Signalgenerators (10) ein Statussignal zu generieren und der Logikeinheit zuzuführen.

5. Vorrichtung nach Anspruch 1, wobei in dem dritten Betriebszustand (III) das Schaltelement (6) inaktiv ist und der Signalgenerator (10) und die Energiequelle (13) aktiv sind, um das passive Eingangssignal (5) zwischen den zwei Anschlüssen (3) der Anschlussklemme (2) zu erkennen und mit Hilfe des Signalgenerators (10) ein Statussignal (12) zu generieren und der Logikeinheit (8) zuzuführen.

6. Vorrichtung nach einem oder mehreren der vorhergehenden Ansprüche, wobei in dem Schaltungszweig, welcher die Gleichrichtervorrichtung (9), den Signalgenerator (10) und die Schutzvorrichtung (15) aufweist, weiterhin ein Strombegrenzungselement (17) zur Begrenzung und/oder Regelung des Stroms in diesem Schaltungszweig vorgesehen ist.

7. Vorrichtung nach einem oder mehreren der vorhergehenden Ansprüche, wobei das Schaltelement (6) und das dazugehörige erste Steuersignal (7) redundant ausgestaltet sind.

8. Vorrichtung nach einem oder mehreren der vorhergehenden Ansprüche, wobei das erste Steuersignal (7), das zweite Steuersignal (11), das dritte Steuersignal (14) und das Statussignal (12) mittels einer galvanischen Trennung (16) von der Logikeinheit (8) getrennt sind.

## Claims

1. Multifunctional I/O apparatus (1), featuring a connection terminal (2) with two connections (3) and a circuit electronics system (4) which detects, with the help of several adjustable operating states, an active input signal (19) or a passive input signal (5) present at the two connections (3) of the connection terminal (2) or a load (18) driven externally, which is connected to the two connections of the connection terminal, wherein the circuit electronics system (4) features the following:
at least one switching element (6), which can be controlled by a logic unit (8) via a first control signal (7) in such a way that it short-circuits the two connections (3) of the connecting terminal (2) or separates them from one another,
a signal generator (10), which can be controlled by the logic unit (8) via a second control signal (11) in such a way that it generates a status signal (12) when an active input signal (19) is present which is able to supply the signal generator (10) with sufficient energy so that the signal generator can be operated appropriately, or when the passive input signal (5) is present which is not able to supply the signal generator (10) with sufficient energy so that the signal generator can be operated appropriately, and supplies said status signal to the logic unit (8)
an energy source (13) which can be controlled by the logic unit (8) via a third control signal (14) in such a way that it provides the necessary energy to operate the signal generator (10) when the passive input signal (5) is present at the two connections (3) of the connection terminal (2),
a protective device (15) which is switched between the signal generator (10) and the energy source (13),
the logic unit (8), which differentiates between a first operational state (I), a second operational state (II) and a third operational state (III) depending on the operational state of the circuit electronics system that is configured, and which uses the first control signal (7), the second control signal (11) and the third control signal (14) to control the switching element (6), the signal generator (10) and the energy source (13) according to the set operational state.

2. Apparatus as claimed in Claim 1, wherein a rectifier apparatus (9) is provided, which, in the event that an AC voltage is present as a passive input signal (5) or an active input signal (19), rectifies the passive input signal (5) present or the active input signal (19) present and supplies the rectified passive input signal (5) or active input signal (19) to the downstream signal generator (10).

3. Apparatus as claimed in Claim 1, wherein in the first operational state (1) the signal generator (10) and the energy source (13) are inactive and the logic unit (8) switches the switching element (6) when required in order to control the connected load (18), which is driven externally, between the two terminals (3) of the connection terminal (2).

4. Apparatus as claimed in Claim 1 or 2, wherein in the second operational state (II) the switching element (6) and the energy source (13) are inactive and the signal generator (10) is active in order to detect the active input signal (19) between the two connections (3) of the connection terminal (2) and to generate a status signal with the help of the signal generator (10) and supply this signal to the logic unit.

5. Apparatus as claimed in Claim 1, wherein in the third operational state (III) the switching element (6) is inactive and the signal generator (10) and the energy source (13) are active in order to detect the passive input signal (5) between the two connections (3) of the connection terminal (2) and to generate a status signal (12) using the signal generator (10) and to supply this signal to the logic unit (8).

6. Apparatus as claimed in one or more of the previous claims, wherein in the branch circuit, which features the rectifier apparatus (9), the signal generator (10) and the protective device (15), a current limiting element (17) is also provided to limit and/or regulate the current in this branch circuit.

7. Apparatus as claimed in one or more of the previous claims, wherein the switching element (6) and the associated first control signal (7) are designed with redundancy.

8. Apparatus as claimed in one or more of the previous claims, wherein the first control signal (7), the second control signal (11), the third control signal (14) and the status signal (12) are separated from the logic unit (8) via galvanic isolation (16).

## Revendications

1. Dispositif d'E/S multifonctionnel (1), comportant une borne de raccordement (2) avec deux connexions (3) et une électronique de commutation (4), laquelle détecte au moyen de plusieurs états de fonctionnement réglables un signal d'entrée actif (19) ou un signal d'entrée passif (5) présent sur les deux connexions (3) de la borne de raccordement (2), ou commande / commute une charge externe (18), qui est raccordée aux deux connexions de la borne de raccordement, l'électronique de commutation (4) comportant les éléments suivants :
au moins un élément de commutation (6), lequel est contrôlable au moyen d'un premier signal de commande (7) d'une unité logique (8), de telle sorte qu'il court-circuite ou sépare les deux connexions (3) de la borne de raccordement (2),
un générateur de signaux (10), lequel est contrôlable au moyen d'un deuxième signal de commande (11) de l'unité logique (8), de telle sorte qu'en présence du signal d'entrée actif (19), lequel est en mesure d'acheminer au générateur de signaux (10) suffisamment d'énergie afin que celui-ci puisse fonctionner correctement, ou qu'en présence du signal d'entrée passif (5), lequel n'est pas en mesure d'acheminer au générateur de signaux (10) suffisamment d'énergie afin que celui-ci puisse fonctionner correctement, il génère un signal d'état (12) et achemine ce dernier à l'unité logique (8),
une source d'énergie (13), laquelle est contrôlable au moyen d'un troisième signal de commande (14) de l'unité logique (8), de telle sorte qu'en présence du signal d'entrée passif (5) sur les deux connexions (3) de la borne de raccordement (2), la source met à disposition l'énergie nécessaire pour le fonctionnement du générateur de signaux (10),
un dispositif de protection (15), qui est couplé entre le générateur de signaux (10) et la source d'énergie (13),
l'unité logique (8), laquelle fait la distinction, selon l'état de fonctionnement réglé de l'électronique de commutation (4), entre un premier état de fonctionnement (I), un deuxième état de fonctionnement (II) et un troisième état de fonctionnement (III), et commande, à l'aide du premier signal de commande (7), du deuxième signal de commande (11) et du troisième signal de commande (14), l'élément de commutation (6), le générateur de signaux (10) et la source d'énergie (13) en fonction de l'état de fonctionnement réglé.

2. Dispositif selon la revendication 1, pour lequel est prévu un dispositif redresseur (9), lequel redresse, en présence d'une tension alternative en tant que signal d'entrée passif (5) ou signal d'entrée actif (19), le signal d'entrée passif (5) ou le signal d'entrée actif (19) présent, et achemine le signal d'entrée passif (5) ou le signal d'entrée actif (19) au générateur de signaux (10) couplé en aval.

3. Dispositif selon la revendication 1, pour lequel, dans le premier état de fonctionnement (I), le générateur de signaux (10) et la source d'énergie (13) sont inactifs et l'unité logique (8) commute l'élément de commutation (6) en fonction de la demande, afin de commander la charge externe connectée (18) entre les deux connexions (3) de la borne de raccordement (2).

4. Dispositif selon la revendication 1 et 2, pour lequel dans le deuxième état de fonctionnement (II), l'élément de commutation (6) et la source d'énergie (13) sont inactifs et le générateur de signaux (10) est actif, afin de détecter le signal d'entrée actif (19) entre les deux connexions (3) de la borne de raccordement et de générer à l'aide du générateur de signaux (10) un signal d'état (12) et de l'acheminer à l'unité logique (8).

5. Dispositif selon la revendication 1, pour lequel, dans le troisième état de fonctionnement (III), l'élément de commutation (6) est inactif et le générateur de signaux (10) et la source d'énergie (13) sont actifs, afin de détecter le signal d'entrée passif (5) entre les deux connexions (3) de la borne de raccordement (2) et de générer à l'aide du générateur de signaux (10) un signal d'état (12) et de l'acheminer à l'unité logique (8).

6. Dispositif selon l'une ou plusieurs des revendications précédentes, pour lequel est prévu en outre - dans la branche de circuit comprenant le dispositif redresseur (9), le générateur de signaux (10) et le dispositif de protection (15) - un élément de limitation de courant (17) destiné à la limitation et/ou à la régulation du courant dans cette branche de circuit.

7. Dispositif selon l'une ou plusieurs des revendications précédentes, pour lequel l'élément de commutation (6) et le premier signal de commande (7) correspondant sont conçus de façon redondante.

8. Dispositif selon l'une ou plusieurs des revendications précédentes, pour lequel le premier signal de commande (7), le deuxième signal de commande (11), le troisième signal de commande (14) et le signal d'état (12) sont séparés de l'unité logique (8) au moyen d'une séparation galvanique (16).
